# EUROPEAN PATENT SPECIFICATION

(11) **EP 4 190 648 B1**
(45) Date of publication and mention of the grant of the patent: **29.05.2024**
(21) Application number: 21212588.4
(22) Date of filing: 06.12.2021
(51) Int. Cl.: B60T 1/10, B60T 13/74, B60T 17/22

(54) **ELECTROMECHANICAL BRAKE ACTUATOR, BRAKE SYSTEM HAVING THE ELECTROMECHANICAL BRAKE ACTUATOR AND METHOD FOR OPERATING THE ELECTROMECHANICAL BRAKE ACTUATOR**
ELEKTROMECHANISCHER BREMSAKTUATOR, BREMSSYSTEM MIT EINEM ELEKTROMECHANISCHEN BREMSAKTUATOR UND VERFAHREN ZUM BETRIEB DES ELEKTROMECHANISCHEN BREMSAKTUATORS
ACTIONNEUR DE FREIN ÉLECTROMÉCANIQUE, SYSTÈME DE FREINAGE COMPORTANT L'ACTIONNEUR DE FREIN ÉLECTROMÉCANIQUE ET PROCÉDÉ DE FONCTIONNEMENT DE L'ACTIONNEUR DE FREIN ÉLECTROMÉCANIQUE

(43) Date of publication of application: 07.06.2023
(73) Proprietor: KNORR-BREMSE Systeme für Schienenfahrzeuge GmbH, 80809 München (DE)
(72) Inventor: BARATH, Gabor, 2335 Taksony (HU)
(74) Representative: Prüfer & Partner mbB Patentanwälte · Rechtsanwälte

(56) References cited:
- WO-A1-2019/185917
- WO-A1-2021/078716
- US-A1- 2006 108 867

## Description

The invention relates to an electromechanical brake actuator, a brake system having the electromechanical brake actuator, and a method for operating the electromechanical brake actuator, in particular, for a rail vehicle. Systems with this type of actuators are disclosed in the WO 2021/078716 A1, US 2006/108867 and WO 2019/185917 A1.

Hitherto, rail vehicles are provided with powerful motors for accelerating the train up to the traveling speed. For decelerating the train, an electrodynamic brake can be used which means that the motors provided for accelerating the train are switched to a generator operation and, therefore, can be used as a brake, wherein a recuperated energy is supplied back to a main AC or DC grid.

However, a drawback of this electro dynamic brake is that it doesn't work at a speed approaching zero and that it cannot lock the stationary vehicle in a generator operation mode.

Therefore, for compensating this drawback, pneumatic or hydraulic brakes are used for braking and holding purposes. The currently used actuators for the braking and holding purposes work against a spring generating a maximum brake force when the actuators are not supplied with external energy so that the stationary train can be locked. On the other hand, when a supply of the actuators is available, these brakes can be used for a controlled deceleration and, therefore, supplement the electrodynamic brake. Nowadays, more and more, electromechanical brakes are used which are operated by means of electrical energy. However, these electromechanical brakes do not work effectively.

Therefore, the object underlying the invention is to remedy the above disadvantages and to provide an electromechanical brake with an increased effectiveness.

The object is achieved by an electromechanical brake actuator according to claim 1, a brake system according to claim 6 and a method for operating the electromechanical brake actuator according to claim 7.

According to an aspect of the invention, an electromechanical brake actuator comprises a motor configured to move a brake component by being accelerated and decelerated in order to initiate or stop braking of the rail vehicle and to function as a generator while being decelerated, a power supply connector configured to supply electrical components of the brake actuator with electrical energy from outside of the brake actuator, an internal energy storage device connectable to the motor, and a switching device configured to enable and to disable the power supply from the outside of the brake actuator.

Moving a brake component in order to initiate or stop braking of the rail vehicle means that, e.g., a brake pad is moved towards a brake disc or a wheel of the rail vehicle and it is pressed against the brake disc or the wheel for providing a braking effect. For releasing the braking effect, the pressing is released by moving the brake pad away from the brake disc or from the wheel.

When the brake component is moved towards the brake disc or away from the brake disc, initially, the motor is accelerated, as the case may be, it is operated at a constant rotational speed, and finally, it is decelerated. When the motor is decelerated, it can function as a generator and, therefore, energy is generated as a recuperated energy instead of being wasted in heat. This recuperated energy is stored in the internal energy storage device and it can increase effectiveness of the operation.

In an advantageous implementation of the electromechanical brake actuator, the switching device comprises a diode.

Providing a diode as a switching device for preventing the energy stored in the internal energy storage device to leak into the external power supply is an easy and cost-effective way for implementing this function.

In a further advantageous implementation of the electromechanical brake actuator, the switching device comprises a FET, in particular, a MOSFET.

The use of the FET or MOSFET provides the advantage that, when the electric equipment of the brake actuator is supplied by the external power supply, a supply of the brake actuator is effective due to a low series resistance.

In a further advantageous implementation of the electromechanical brake actuator, the internal energy storage device comprises a capacitor.

The provision of the capacitor has the advantage that an easy, efficient and cost-effective storage device is used.

In a further advantageous implementation of the electromechanical brake actuator, it further comprises a control electronics configured to control the motor, wherein the control electronics is configured to increase voltage supplied by the motor when functioning as the generator.

When the control electronics is configured to increase the voltage, the amount of energy charged in the DC link capacitor can be increased.

According to a further aspect of the invention, a brake system of a rail vehicle comprises an electromechanical brake actuator.

Due to such a brake system, the increased effectiveness of the operation of the brake actuators can be ensured.

According to another aspect of the invention, a method for operating an electromechanical brake actuator comprises the steps: accelerating a rotation of the motor by supplying the motor with energy; decelerating the rotation of the motor while recuperating the energy generated by the motor functioning as the generator; and storing the recuperated energy in the internal energy storage device.

When executing this method, by the motion of the motor including acceleration and deceleration, electrical energy generated by the deceleration can be recuperated and stored in the internal energy storage device and, therefore, an energy supplied by external power supply can be reduced.

In an advantageous implementation of the method, the recuperated energy is recuperated during deceleration of the rotation of the motor for initiating the braking as well as for stopping the braking.

Due to this characteristic, any operation mode of the motor including deceleration supplies the recuperated energy to the internal energy storage device and, therefore, a larger amount of recuperated energy is possible.

In a further advantageous implementation of the method, after the recuperation, the electrical components of the brake actuator are supplied with the recuperated electrical energy as long as a voltage level of the internal storage device exceeds a predetermined threshold, and the electrical components are supplied with energy from an external power supply device outside of the brake actuator when the voltage level of the internal storage device falls below the predetermined threshold.

This behavior ensures a reliable function of the brake actuator since, when the internal voltage provided by the recuperation exceeds the predetermined threshold and it is high enough to supply the electrical components of the brake actuator, the supply can be executed by the recuperated energy and, when the internal voltage falls below the predetermined threshold, the electrical components of the brake actuator can be supplied by the external energy.

In an advantageous implementation of the method, the predetermined threshold corresponds to the voltage level of the external power supply applied to the power supply connector.

By determining the threshold in such way, a reliable operation of the brake actuator and the effectiveness of the system can be ensured.

In a further advantageous implementation of the method, when the voltage level of the internal storage device exceeds the predetermined threshold, a supply of the electrical components by the electrical energy from the external power supply is disabled by a diode, and when the voltage level of the internal storage device falls below the predetermined threshold, the supply with electrical energy from outside of the brake actuator is enabled by a FET, in particular, a MOSFET.

When the supply from outside is disabled by the diode, the function of preventing the energy stored in the internal energy storage device to leak into the external power supply is implemented in an easy and cost-effective way, wherein, in case of a higher voltage level of the external power supply, the supply of the electrical components could be automatically enabled by the diode, however, in order to increase efficiency of the operation during supply by the external power supply, the FET enables a more effective connection due to its low series resistance.

In a further advantageous implementation of the method, the voltage level generated by the motor functioning as generator is increased by a predefined switching strategy.

By increasing the voltage, the energy amount stored in the internal energy storage device can be increased and, also, the internal working voltage can be increased for providing a more effective system.

Below, the invention is elucidated by means of embodiments referring to the attached drawings.

In particular,
- Fig. 1: shows a structural illustration of a brake system comprising an electromechanical brake actuator;
- Fig. 2: shows a diagram illustrating a correlation between a speed of a motor of the electromechanical brake actuator and an internal DC voltage of the brake actuator; and
- Fig. 3: shows a flowchart of a method for operating the electromechanical brake actuator.

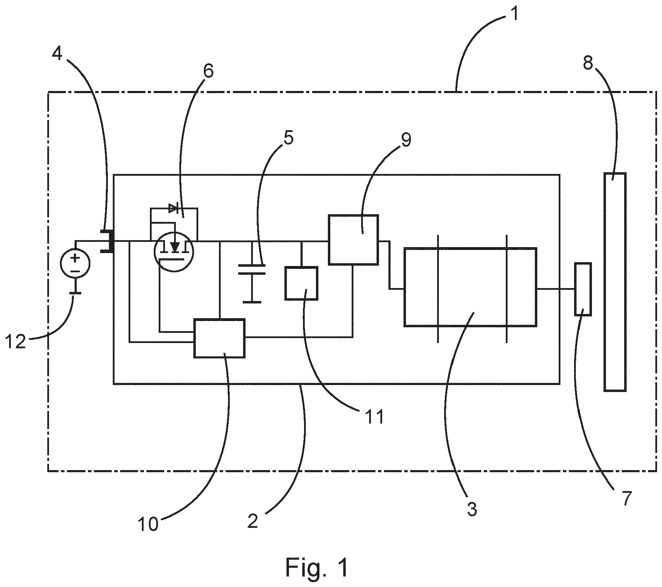

**Fig. 1** shows a structural illustration of a brake system 1 of a rail vehicle, which brake system comprises an electromechanical brake actuator 2 according to the invention.

The brake actuator 2 comprises electrical components, such as a motor 3, a power supply connector 4, an internal energy storage device 5, and a switching device 6. Furthermore, the brake actuator 2 comprises a control electronics 9 and a controller 10 controlling the control electronics 9 and the switching device 6. Furthermore, the electromechanical brake actuator 2 comprises internal consumers 11 formed by further electrical and electronic components.

The motor 3 is configured to move a brake component by being accelerated and decelerated in order to initiate or stop braking of the rail vehicle and to function as a generator while being decelerated.

In this embodiment, the brake component moved by the motor 3 is a brake pad 7 which is moved towards and away from a brake disc 8. In alternative embodiments, the moved brake component can also be moved to, e.g., a wheel of the rail vehicle. When moved towards the brake disc 8, the brake pad 7 is pressed onto the brake disc 8 and, therefore, braking is initiated. On the other hand, when the brake pad 7 is moved away from the brake disc 8, the pressing is released and the brake disc 8 can be rotated freely so that the braking is stopped.

The power supply connector 4 is configured to supply the electrical components with electrical energy from outside of the brake actuator 2. This electrical energy from outside of the brake actuator 2 is provided by a DC supply system 12. The power supply connector 4 is formed by a plug device; however, in alternative embodiments, the power supply connector 4 can also be formed by a wireless transmitter and/or the DC supply system 12 can be replaced by, e.g., an AC supply system.

The internal energy storage device 5 is connected to the motor 3 via the control electronics 9. In alternative embodiments, the internal energy storage device 5 is connected to the motor 3 via another electric or electronic component. When the motor 3 functions as generator, the recuperated energy generated by the motor 3 can be stored in the internal energy storage device 5. On the other hand, the motor 3 and the remaining electrical and electronic components can be supplied by means of the internal energy storage device 5. The internal energy storage device 5 comprises a capacitor. In alternative embodiments, the internal energy storage device 5 can also comprise a plurality of capacitors or be formed by another component, e.g., an accumulator.

The switching device 6 is configured to enable or to disable the power supply from outside the brake actuator 2, i.e., from the DC supply system 12 in the present embodiment. The switching device 6 comprises a MOSFET which connects the electrical and electronic equipment of the brake actuator 2 with the DC supply system 12. When connecting the electrical and electronic equipment of the brake actuator 2 with the DC supply system 12, the MOSFET performs the connection in the efficient way due to its low series resistance. On the other hand, when the MOSFET separates the DC supply system 12 from the electrical and electronic equipment of the brake actuator 2, a diode formed by an existing body diode of the MOSFET decouples the electrical and electronic components of the brake actuator 2 from the DC supply system 12. In alternative embodiments, the switching device 6 can comprise a FET instead of the MOSFET and a separate diode.

The control electronics 9 is configured to control the motor 3. In particular, when accelerating the motor 3, the control electronics 9 provides a necessary motor current in a suitable manner. When the motor 3 functions as generator, a voltage on terminals of the motor 3 can be increased by means of an adequate switching strategy. In particular, the switching is such that, during a shorter period, a reduced current flows through the coils, whereas, in another period, due to a back EMF current, the voltage on the terminals of the motor 3 is increased.

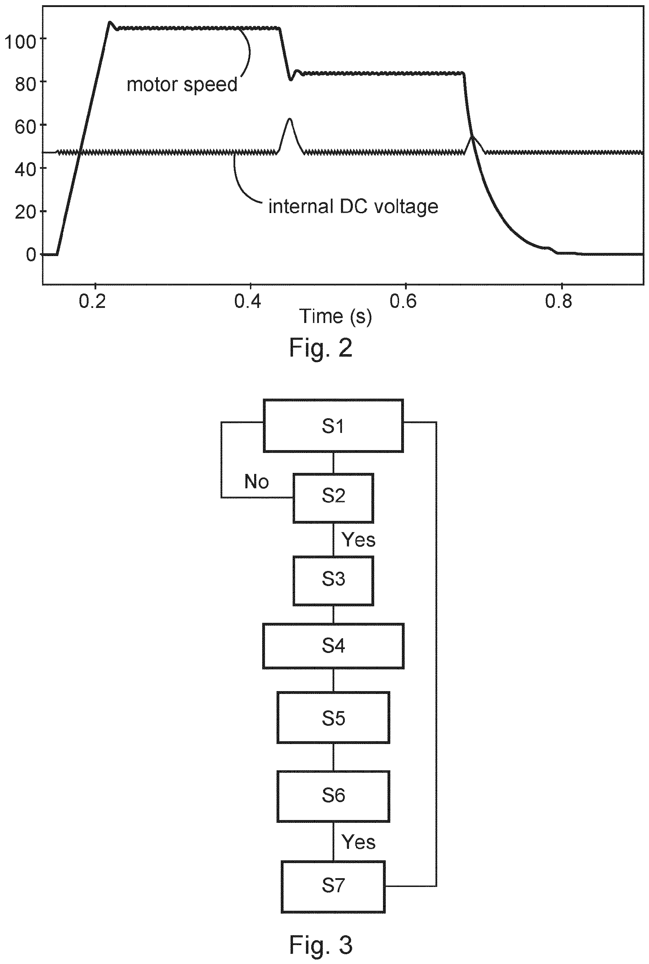

Fig. 2 shows a diagram illustrating a correlation between a speed of the motor 3 of the electromechanical brake actuator 2 and an internal DC voltage of the brake actuator 2.

As to be seen from the diagram, at the beginning, the motor speed is increased from 0 to about 105 rad/s. Subsequently, the motor speed is reduced to about 82 rad/s and afterwards, the motor speed is reduced again to 0.

When the motor is accelerated, i.e., a motor speed is increased, and when the motor runs at a constant motor speed, the internal DC voltage is constant. However, when the motor is decelerated, i.e., the motor speed is reduced, positive peaks in the internal DC voltage can be observed. These positive peaks describe the occurrence of energy which can be recuperated.

Fig. 3 shows a flowchart of a method for operating the electromechanical brake actuator.

In step S1, a "normal" operating state, wherein the motor 3 of the electromechanical brake actuator 2 is operated for increasing the brake force, is designated.

In step S2, a decision is made whether deceleration of the motor 3 of the brake actuator 2 is to be performed or not. If no deceleration is necessary, the procedure goes back to step S1. If a rotation of the motor 3 has to be decelerated, the procedure progresses to step S3.

In step S3, the switching device 6 switches such that the power supply from outside of the brake actuator 2 is disabled by means of a diode if the internal voltage of the brake actuator 2 is higher than the voltage of the DC supply system 12. In an alternative embodiment, no separate diode is provided but the power supply from the outside of the brake actuator 2 is disabled by means of an accordingly controlled FET or MOSFET.

In step S4 following to S3, a regenerative braking is performed. The rotation of the motor 3 is decelerated and the energy generated by the motor 3 functioning as generator is recuperated. During the deceleration of the rotation of the motor 3, the voltage on the terminals of the motor 3 is increased by means of the above described predefined switching strategy with the help of the motor inductance. For releasing the braking, the action of the motor is basically identical to the initiation of the braking; however, the motor 3 is operated in the reverse direction. Nevertheless, when starting the releasing, the rotation of the motor 3 is accelerated and, at the end of this action, the rotation of the motor 3 is decelerated while recuperating the energy. In an alternative embodiment, the energy is merely recuperated during motion in one direction of the motor 3.

In step S5 following to S4, the energy recuperated by the motor 3 functioning as generator is then stored in the internal energy storage device 5 and also consumed by the electrical and electronic components of the electromechanical brake actuator 2 .

In step S6 following to S5, the decision is made whether the input voltage level, i.e., the voltage level of the DC supply system 12 is higher than the voltage level of the internal energy storage device 5.

If the voltage level of the DC supply system 12 is higher than the voltage level of the internal energy storage device 5, therefore, when the internal voltage level falls below the voltage level of the DC supply system 12, the procedure progresses to step S7. In an alternative embodiment, the voltage level of the DC supply system 12, i.e., the voltage level of the external power supply, is not used as the threshold for switching the power supply of the brake actuator 2 but a predetermined threshold having a defined offset and/or a defined hysteresis is predetermined.

In step S7, the MOSFET as the switching device 6 switches such that the efficiency of the power supply from outside of the brake actuator 2 is increased. Basically, a provided diode automatically enables the power supply from outside of the brake actuator, however, losses due to the mere use of the diode can be prevented. Therefore, the electrical components of the brake actuator 2 are supplied with the energy from outside of the brake actuator 2.

While the invention has been illustrated and described in detail in the drawings and the foregoing description, such illustration and description are to be considered illustrative or exemplary and not restrictive. The invention defined in the claims is not limited to the disclosed embodiments. From reading the present invention other modifications will be apparent to a person skilled in the art. Such modifications may involve other features, which are already known in the art and may be used instead of or in addition to features already described herein. In the claims, the word "comprising" does not exclude other elements or steps, and the indefinite article "a" or "an" does not exclude a plurality.

### LIST OF REFERENCE SIGNS

- 1: brake system
- 2: electromechanical brake actuator
- 3: motor
- 4: power supply connector
- 5: internal energy storage device
- 6: switching device
- 7: brake pad
- 8: brake disc
- 9: control electronics
- 10: controller
- 11: remaining internal consumers
- 12: DC supply system

## Claims

1. An electromechanical brake actuator (2) for a rail vehicle, the brake actuator comprising
a motor (3) configured to move a brake component by being accelerated and decelerated in order to initiate or stop braking of the rail vehicle and to function as a generator while being decelerated,
a power supply connector (4) configured to supply electrical components of the brake actuator (2) with electrical energy from outside of the brake actuator (2),
an internal energy storage device (5) connectable to the motor (3), and
a switching device (6) configured to enable and to disable the power supply from the outside of the brake actuator (2).

2. The electromechanical brake actuator (2) of claim 1, wherein
the switching device (6) comprises a diode.

3. The electromechanical brake actuator (2) of claim 1 or 2, wherein
the switching device (6) comprises a FET, in particular, a MOSFET.

4. The electromechanical brake actuator (2) of anyone of the preceding claims, wherein
the internal energy storage device (5) comprises a capacitor.

5. The electromechanical brake actuator (2) of anyone of the preceding claims, further comprising
a control electronics (9) configured to control the motor (3), wherein the control electronics (9) is configured to increase voltage supplied by the motor (3) when functioning as the generator.

6. A brake system (1) of a rail vehicle comprising an electromechanical brake actuator (2) of anyone of the preceding claims.

7. A method for operating an electromechanical brake actuator (2) of anyone of the claims 1 to 5, comprising the steps:
accelerating a rotation of the motor (3) by suppling the motor (3) with energy;
decelerating the rotation of the motor (3) while recuperating the energy generated by the motor (3) functioning as the generator; and
storing the recuperated energy in the internal energy storage device (5) .

8. The method of claim 7, wherein
the recuperated energy is recuperated during deceleration of the rotation of the motor (3) for initiating the braking as well as for stopping the braking.

9. The method of anyone of claims 7 or 8, wherein
after the recuperation, the electrical components of the brake actuator (2) are supplied with the recuperated electrical energy as long as a voltage level of the internal storage device (5) exceeds a predetermined threshold, and the electrical components are supplied with energy from an external power supply outside of the brake actuator (2) when the voltage level of the internal storage device (5) falls below the predetermined threshold.

10. The method of claim 9, wherein
the predetermined threshold corresponds to the voltage level of the external power supply applied on the power supply connector (4) .

11. The method of claim 9 or 10, wherein,
when the voltage level of the internal storage device (5) exceeds the predetermined threshold, a supply of the electrical components by the electrical energy from the external power supply is disabled by a diode, and when the voltage level of the internal storage device (5) falls below the predetermined threshold, the supply with electrical energy from outside of the brake actuator is enabled by a FET, in particular, a MOSFET.

12. The method of anyone of claims 7 to 10, wherein the voltage level generated by the motor (3) functioning as generator is increased by a predefined switching strategy.

## Patentansprüche

1. Elektromechanischer Bremsaktuator (2) für ein Schienenfahrzeug, der Bremsaktuator umfassend
einen Motor (3), der so konfiguriert ist, dass er dadurch, dass er beschleunigt und verlangsamt wird, eine Bremskomponente bewegt, um eine Bremsung des Schienenfahrzeugs einzuleiten oder zu stoppen, und als ein Generator fungiert, während er verlangsamt wird,
einen Stromversorgungsanschluss (4), der so konfiguriert ist, dass er elektrische Komponenten des Bremsaktuators (2) mit elektrischer Energie von außerhalb des Bremsaktuators (2) versorgt,
eine interne Energiespeichervorrichtung (5), die an den Motor (3) angeschlossen werden kann, und
eine Schaltvorrichtung (6), die zum Aktivieren und Deaktivieren der Stromversorgung von außerhalb des Bremsaktuators (2) konfiguriert ist.

2. Elektromechanischer Bremsaktuator (2) nach Anspruch 1, wobei die Schaltvorrichtung (6) eine Diode umfasst.

3. Elektromechanischer Bremsaktuator (2) nach Anspruch 1 oder 2, wobei die Schaltvorrichtung (6) einen FET, insbesondere einen MOSFET, umfasst.

4. Elektromechanischer Bremsaktuator (2) nach einem der vorstehenden Ansprüche, wobei
die interne Energiespeichervorrichtung (5) einen Kondensator umfasst.

5. Elektromechanischer Bremsaktuator (2) nach einem der vorstehenden Ansprüche, weiter umfassend
eine Steuerelektronik (9), die so konfiguriert ist, dass sie den Motor (3) steuert, wobei die Steuerelektronik (9) so konfiguriert ist, dass sie die vom Motor (3) versorgte Spannung erhöht, wenn er als Generator fungiert.

6. Bremssystem (1) eines Schienenfahrzeugs, umfassend einen elektromechanischen Bremsaktuator (2) nach einem der vorstehenden Ansprüche.

7. Verfahren zum Betreiben eines elektromechanischen Bremsaktuators (2) nach einem der Ansprüche 1 bis 5, umfassend die Schritte:
Beschleunigen einer Drehung des Motors (3) durch Versorgen des Motors (3) mit Energie;
Verlangsamen der Drehung des Motors (3) unter gleichzeitiger Rückgewinnung der vom Motor (3), der als Generator fungiert, erzeugten Energie; und
Speichern der zurückgewonnenen Energie in der internen Energiespeichervorrichtung (5).

8. Verfahren nach Anspruch 7, wobei
die zurückgewonnene Energie während Verlangsamung der Drehung des Motors (3) zum Einleiten der Bremsung sowie zum Stoppen der Bremsung zurückgewonnen wird.

9. Verfahren nach einem der Ansprüche 7 oder 8, wobei:
die elektrischen Komponenten des Bremsaktuators (2) nach der Rückgewinnung mit der zurückgewonnenen elektrischen Energie versorgt werden, solange ein Spannungspegel der internen Speichervorrichtung (5) einen vorbestimmten Schwellenwert überschreitet, und die elektrischen Komponenten mit Energie aus einer externen Stromversorgung außerhalb des Bremsaktuators (2) versorgt werden, wenn der Spannungspegel der internen Speichervorrichtung (5) unter den vorbestimmten Schwellenwert fällt.

10. Verfahren nach Anspruch 9, wobei:
der vorbestimmte Schwellenwert dem Spannungspegel der externen Stromversorgung entspricht, die am Stromversorgungsanschluss (4) anliegt.

11. Verfahren nach Anspruch 9 oder 10, wobei:
wenn der Spannungspegel der internen Speichervorrichtung (5) den vorbestimmten Schwellenwert überschreitet, eine Versorgung der elektrischen Komponenten mit der elektrischen Energie aus der externen Stromversorgung durch eine Diode deaktiviert wird, und wenn der Spannungspegel der internen Speichervorrichtung (5) unter den vorbestimmten Schwellenwert fällt, die Versorgung mit elektrischer Energie von außerhalb des Bremsaktuators durch einen FET, insbesondere einen MOSFET, aktiviert wird.

12. Verfahren nach einem der Ansprüche 7 bis 10, wobei der vom als Generator fungierenden Motor (3) erzeugte Spannungspegel durch eine vordefinierte Schaltstrategie erhöht wird.

## Revendications

1. Actionneur de frein électromécanique (2) pour un véhicule ferroviaire, l'actionneur de frein comprenant
un moteur (3) configuré pour déplacer un composant de frein en étant accéléré et décéléré afin d'amorcer ou d'arrêter le freinage du véhicule ferroviaire et pour fonctionner comme un générateur en même temps qu'il est décéléré,
un connecteur d'alimentation (4) configuré pour alimenter les composants électriques de l'actionneur de frein (2) en énergie électrique depuis l'extérieur de l'actionneur de frein (2),
un dispositif de stockage d'énergie interne (5) pouvant être raccordé au moteur (3), et
un dispositif de commutation (6) configuré pour activer et désactiver l'alimentation depuis l'extérieur de l'actionneur de frein (2).

2. Actionneur de frein électromécanique (2) selon la revendication 1, dans lequel le dispositif de commutation (6) comprend une diode.

3. Actionneur de frein électromécanique (2) selon la revendication 1 ou 2, dans lequel le dispositif de commutation (6) comprend un FET, en particulier un MOSFET.

4. Actionneur de frein électromécanique (2) selon l'une quelconque des revendications précédentes, dans lequel
le dispositif de stockage d'énergie interne (5) comprend un condensateur.

5. Actionneur de frein électromécanique (2) selon l'une quelconque des revendications précédentes, comprenant en outre
une électronique de commande (9) configurée pour commander le moteur (3), dans lequel l'électronique de commande (9) est configurée pour augmenter la tension fournie par le moteur (3) lorsqu'il fonctionne en tant que générateur.

6. Système de freinage (1) d'un véhicule ferroviaire comprenant un actionneur de frein électromécanique (2) selon l'une quelconque des revendications précédentes.

7. Procédé de fonctionnement d'un actionneur de frein électromécanique (2) selon l'une quelconque des revendications 1 à 5, comprenant les étapes de :
accélération d'une rotation du moteur (3) en alimentant le moteur (3) en énergie ;
décélération de la rotation du moteur (3) tout en récupérant l'énergie générée par le moteur (3) fonctionnant en tant que générateur ; et
stockage de l'énergie récupérée dans le dispositif de stockage d'énergie interne (5).

8. Procédé selon la revendication 7, dans lequel
l'énergie récupérée est récupérée lors de la décélération de la rotation du moteur (3) pour amorcer le freinage ainsi que pour arrêter le freinage.

9. Procédé selon l'une quelconque des revendications 7 ou 8, dans lequel
après la récupération, les composants électriques de l'actionneur de frein (2) sont alimentés en énergie électrique récupérée tant qu'un niveau de tension du dispositif de stockage interne (5) dépasse un seuil prédéterminé, et les composants électriques sont alimentés en énergie à partir d'une alimentation externe à l'extérieur de l'actionneur de frein (2) lorsque le niveau de tension du dispositif de stockage interne (5) tombe au-dessous du seuil prédéterminé.

10. Procédé selon la revendication 9, dans lequel
le seuil prédéterminé correspond au niveau de tension de l'alimentation externe appliqué sur le connecteur d'alimentation (4).

11. Procédé selon la revendication 9 ou 10, dans lequel,
lorsque le niveau de tension du dispositif de stockage interne (5) dépasse le seuil prédéterminé, une alimentation des composants électriques en énergie électrique provenant de l'alimentation externe est désactivée par une diode, et lorsque le niveau de tension du dispositif de stockage interne (5) tombe au-dessous du seuil prédéterminé, l'alimentation en énergie électrique depuis l'extérieur de l'actionneur de frein est activée par un FET, en particulier un MOSFET.

12. Procédé selon l'une quelconque des revendications 7 à 10, dans lequel le niveau de tension généré par le moteur (3) fonctionnant en tant que générateur est augmenté par une stratégie de commutation prédéfinie.
